Europäisches Patentamt

European Patent Office

Office européen des brevets

(11) Numéro de publication: **0 349 426 B1**

# FASCICULE DE BREVET EUROPEEN

(45) Date de publication de fascicule du brevet: **08.06.94**  (51) Int. Cl.5: **G09G 3/22**

(21) Numéro de dépôt: **89401853.0**

(22) Date de dépôt: **28.06.89**

(54) **Ecran fluorescent à micropointes ayant un nombre réduit de circuits d'adressage et procédé d'adressage de cet écran.**

(30) Priorité: **29.06.88 FR 8808757**

(43) Date de publication de la demande:
**03.01.90 Bulletin 90/01**

(45) Mention de la délivrance du brevet:
**08.06.94 Bulletin 94/23**

(84) Etats contractants désignés:
**CH DE GB IT LI NL**

(56) Documents cités:
**EP-A- 0 155 895
DE-A- 3 036 219
FR-A- 2 536 889**

**DISPLAYS TECHNOLOGY AND APPLICA-
TIONS, vol. 8, no. 1, janvier 1987, pages
37-40, Butterworth & Co. (Publishers) Ltd,
Guildford, Surrey, GB; G. LABRUNIE et al.:
"Novel type of emissive flat panel display:
the matrixed cold-cathode microtip fluorescent display"**

(73) Titulaire: **COMMISSARIAT A L'ENERGIE ATO-
MIOUE
31/33, rue de la Fédération
F-75015 Paris Cédex 15(FR)**

(72) Inventeur: **Clerc, Jean-Frédéric
Kogasaka Village D3
681-12 Kogasaka
Machida-shi Tokyo 194(JP)**

(74) Mandataire: **Mongrédien, André et al
c/o BREVATOME
25, rue de Ponthieu
F-75008 Paris (FR)**

Rank Xerox (UK) Business Services
(3.10/3.09/3.3.3)

## Description

La présente invention a pour objet un écran fluorescent à micropointes ayant un nombre réduit de circuits d'adressage et son procédé d'adressage. Elle s'applique notamment à l'affichage d'images fixes ou animées.

Les écrans fluorescents à micropointes connus sont monochromes. On peut en trouver des descriptions dans le rapport du Congrès "Japan Display 86" page 152 ou encore dans la demande de brevet français FR-A-2 568 394. La technique utilisée pour les écrans monochromes peut être extrapolée à des écrans trichromes.

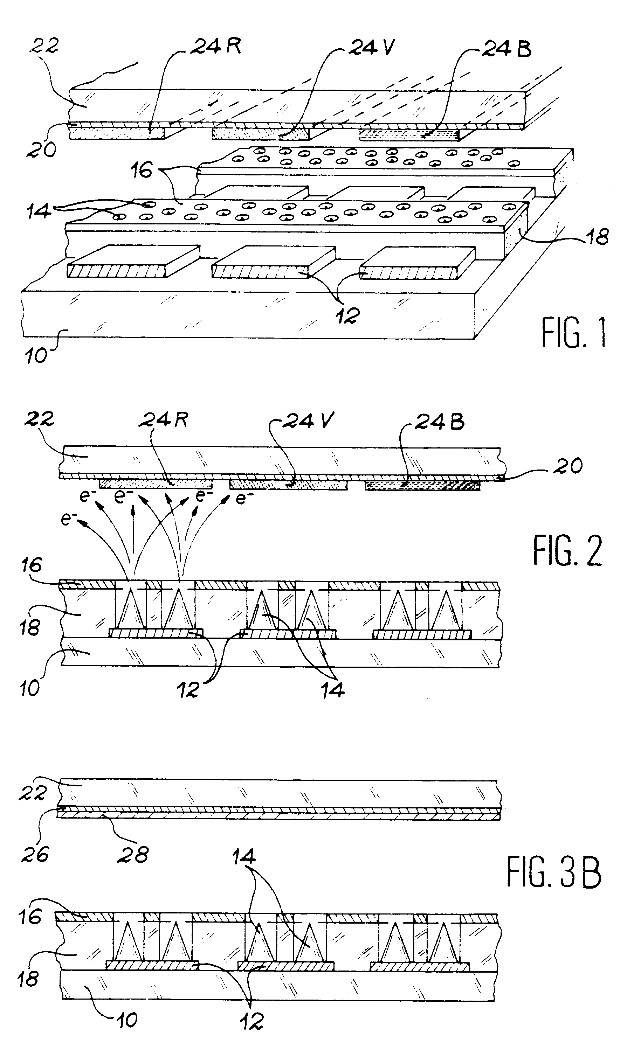

La figure 1 représente schématiquement en perspective un écran trichrome du type matriciel tel que pourrait l'extrapoler logiquement un homme du métier à partir d'un écran monochrome.

Sur un premier substrat 10, en verre par exemple sont disposées des colonnes conductrices 12 (conducteurs cathodiques en oxyde d'étain et d'indium par exemple) supportant des micropointes 14 métalliques en molybdène par exemple. Les colonnes 12 croisent des lignes conductrices perforées 16 (grilles) en niobium par exemple.

Toutes les micropointes 14 positionnées à un croisement d'une ligne 16 et d'une colonne conductrice 12 ont leur sommet sensiblement en face d'une perforation de la ligne 16. Les conducteurs cathodiques 12 et les grilles 16 sont séparés par une couche isolante 18 en silice par exemple, pourvue d'ouvertures permettant le passage des micropointes 14.

Une couche 20 de matériau conducteur (anode) est déposée sur un second substrat 22 transparent en verre par exemple. Des bandes parallèles alternativement en phosphores luminescents dans la couleur rouge 24R, dans la couleur verte 24V et dans la couleur bleue 24B sont déposées sur l'anode 20 en regard des conducteurs cathodiques 12. Les bandes peuvent être remplacées par un motif mosaïque.

Dans cette configuration il faut un triplet de conducteurs cathodiques 12 (un face à une bande "rouge" 24R, un face à une bande "verte" 24V, un face à une bande "bleue" 24B) pour assurer l'affichage en couleur le long d'une colonne de l'écran.

Chaque intersection d'une grille 16 et d'un conducteur cathodique 12 correspond dans ce mode de réalisation à un pixel monochrome. Un pixel "couleur" est composé de trois pixels monochromes rouge, vert et bleu. La combinaison de ces trois couleurs primaires permet à l'oeil de reconstituer un large spectre coloré.

Un écran de ce type possédant N lignes et M colonnes nécessite, en mode couleur : N circuits de commande pour les grilles 16, 3M circuits de commande pour les 3M conducteurs cathodiques 12, plus un circuit pour l'anode 20. Par exemple, un écran d'affichage en couleur de 575 lignes et 720 colonnes (standard français de la télévision en couleur) comprend 575 circuits de commande pour les grilles 16, 2160 circuits de commande pour les conducteurs cathodiques 12.

Un écran d'affichage fluorescent monochrome à micropointes 14 comporte quant à lui 575 circuits de commande pour les grilles 16, et 720 circuits de commande pour les conducteurs cathodiques 12.

La figure 2 représente une section de l'écran fluorescent trichrome à micropointes de la figure 1 tel que pourrait l'extrapoler un homme du métier. L'anode 20 étant unique, les électrons émis par les micropointes 14 d'un pixel se dirigent indifféremment vers un phosphore rouge 24R, vert 24V ou bleu 24B. En particulier, l'émission latérale d'une micropointe 14 conduit des électrons destinés à un phosphore rouge 24R par exemple sur un phosphore vert 24V. Cette émission latérale existe aussi pour les écrans monochromes et entraîne une perte de résolution. Pour un écran trichrome, cette perte de résolution s'accompagne d'un "délavage" des couleurs, préjudiciable à la qualité de la vision.

Il est en outre connu du document EP-A-0 155 895 un écran fluorescent à micropointes comportant des conducteurs lignes supportant les micropointes, des écrans fluorescents en colonnes et des grilles interposées entre ces conducteurs et ces écrans.

Le but de la présente invention est de réduire le nombre total de circuits de commande d'un écran fluorescent à micropointes qu'il soit trichrome ou monochrome.

L'invention permet, d'autre part, l'autofocalisation des électrons émis sur le phosphore émettant dans la couleur désirée, ce qui garantit à l'image une bonne pureté des couleurs.

De manière plus précise, l'invention concerne un écran fluorescent à micropointes à affichage matriciel comportant un premier substrat isolant sur lequel sont disposées, selon les deux directions de la matrice, des colonnes conductrices formant des conducteurs cathodiques supportant des micropointes métalliques et par-dessus les colonnes, N lignes conductrices perforées formant des grilles, ces lignes et colonnes étant séparées par une couche isolante pourvue d'ouvertures permettant le passage des micropointes, chaque croisement d'une ligne et d'une colonne correspondant à un pixel, écran caractérisé en ce qu'il est divisé en k zones $Z_i$, i allant de 1 à k, de N/k lignes successives chacune, les N lignes de l'écran étant regroupées en N/k familles de lignes, chacune des familles de ligne comprenant k lignes, une zone $Z_i$ ne comprenant qu'une ligne de chaque famille, les lignes des différentes familles étant alternées à l'intérieur d'une zone $Z_i$, les lignes d'une même famille étant reliées électriquement entre elles ; et en ce que sur un deuxième substrat transparent en regard du premier, chaque zone Zi comprend une famille d'anodes en ligne recouvertes d'au moins un matériau luminescent, les familles d'anodes correspondant aux différentes zones Zi étant identiques et électriquement indépendantes entre elles, chaque famille d'anodes d'une zone Zi étant en regard des N/k lignes de la zone Zi.

Selon un premier mode de réalisation, l'écran de l'invention étant trichrome, chaque famille d'anodes d'une zone Zi comprend chacune trois séries de N/k bandes conductrices en ligne, les bandes des différentes séries se succédant alternativement, formant N/k triplets de bandes, les bandes d'une de ces séries étant recouvertes par un matériau luminescent dans le rouge, les bandes d'une autre de ces séries étant recouvertes par un matériau luminescent dans le vert , les bandes de la dernière série étant recouvertes par un matériau luminescent dans le bleu, chacun des N/k triplets, formé de trois bandes respectivement recouvertes de matériaux luminescents dans le rouge, dans le vert et dans le bleu, étant respectivement aligné sensiblement en regard d'une des N/k lignes formant grilles, toutes les bandes de chacune des trois séries dans une zone Zi étant reliées électriquement entre elles pour former trois anodes A1,i, A2,i, A3,i.

La découpe des électrodes-grilles forme N/k peignes de k dents suivant les lignes de l'écran. Chaque peigne correspond à une des N/k familles de lignes.

Les anodes ont elles aussi la forme de peignes. Pour un écran trichrome une zone Zi comprend trois peignes-anodes, un pour chacune des couleurs primaires rouge, vert, bleu. Les dents de ces peignes sont alignées sur les grilles de l'écran. Leur largeur est sensiblement inférieur au tiers de la largeur d'une grille, ainsi une dent de chaque peigne peut être en regard d'une grille.

L'invention permet également la réalisation d'un écran monochrome. Dans ce cas, sur le deuxième substrat transparent, chaque famille d'anodes d'une zone Zi comprend une série de bandes conductrices recouvertes par un matériau luminescent, chaque bande conductrice étant sensiblement alignée en regard d'une ligne (grille), les bandes conductrices d'une zone Zi étant reliées électriquement entre elles pour former une anode Ai.

L'invention a aussi pour objet un procédé d'adressage de l'écran précédent.

Selon un premier procédé d'adressage d'un écran conforme à l'invention, l'affichage d'une trame trichrome se fait pendant un temps de trame T. On effectue les opérations suivantes pour les anodes A1,i, i allant de 1 à k, successives puis on répète ces opérations pour les anodes A2,i puis A3,i de manière à afficher pendant un temps de trame T trois images monochromes dans les trois couleurs primaires rouge, vert, bleu.

Ces opérations consistent à :
- porter successivement chacune des anodes A1,i (respectivement A2,i, A3,i) des zones Zi, i allant de 1 à k, à un potentiel VA1max (respectivement VA2max, VA3max) suffisant pour attirer les électrons éventuellement émis par les micropointes avec une énergie supérieure à l'énergie seuil de cathodoluminescence du matériau luminescent correspondant, pendant un temps d'adressage t1 (respectivement t2, t3), périodiquement à une période correspondant au temps de trame T, tel que T = k(t1 + t2 + t3) ; quand les anodes A1,i (respectivement A2,i, A3,i) ne sont pas portées au potentiel VA1max (respectivement VA2max, VA3max) les anodes A1,i (respectivement A2,i, A3,i) sont portées à un potentiel VA1min (respectivement VA2min, VA3min) tel que les électrons émis par les micropointes sont repoussés, ou ont une énergie inférieure à l'énergie de seuil de cathodoluminescence du matériau luminescent correspondant,
- pendant le temps d'adressage t1 (respectivement t2, t3) de chaque anode A1,i (respectivement A2,i, A3,i), porter successivement les différentes familles de lignes à un potentiel VGmax pendant un temps de sélection de ligne $\theta$1 (respectivement $\theta$2, $\theta$3), tel que T = N($\theta$1 + $\theta$2 + $\theta$3) quand elles ne sont pas portées au potentiel VGmax, les différentes familles de lignes sont portées à un potentiel VGmin tel que les micropointes n'émettent pas d'électrons,
- pendant le temps de sélection de ligne $\theta$1 (respectivement $\theta$2, $\theta$3) de chaque ligne de chaque zone Zi, adresser les conducteurs cathodiques de manière à "allumer" les pixels de la ligne qui doivent l'être.

Selon un second procédé d'adressage d'un écran conforme à l'invention, pour l'affichage d'une trame trichrome de l'image réalisée pendant un temps de trame T, on effectue les opérations suivantes pour chacune des zones Zi,i allant de 1 à k, successives :
- porter successivement les familles de lignes à un potentiel VGmax pendant un temps de sélection de ligne t, tel que t = T/N ; quand elles ne sont pas portées au potentiel VGmax, les familles de lignes sont portées au potentiel VGmin tel que les micropointes n'émettent pas d'électrons,
- pendant le temps de sélection t de chaque ligne de la zone Zi concernée, porter successivement les anodes A1,i, A2,i, A3,i respectivement à des potentiels VA1max, VA2max, VA3max, suffisants pour attirer les électrons éventuellement émis par les micropointes avec une énergie supérieure à l'énergie seuil de cathodoluminescence des matériaux luminescents correspondants, pendant des temps d'adressage respectifs t1, t2, t3 tels que t1 + t2 + t3 = t ; quand elles ne sont pas portées aux potentiels VA1max, VA2max, VA3max les anodes A1,i, A2,i, A3,i sont portées aux potentiels VA1min, VA2min, VA3min respectivement, potentiels VA1min,VA2min, VA3min tels que les électrons émis par les micropointes sont repoussés ou ont une énergie inférieure à l'énergie de seuil de cathodoluminescence des matériaux luminescents correspondants,

- pendant le temps d'adressage t1, t2, t3 de chaque anode A1,i, A2,i, A3,i, adresser les conducteurs cathodiques de manière à "allumer" les pixels de la ligne qui doivent l'être.

Pour chaque procédé, à un instant donné, une seule famille de lignes et une seule anode d'une zone sont sélectionnées. L'émission des électrons est localisée sur la surface de recouvrement de la grille et de l'anode sélectée ; cette émission est modulée par le potentiel appliqué sur les conducteurs cathodiques qui fonctionnent conformément à l'état de l'art. Les électrons sont repoussés par les anodes non sélectées et retombent sur la grille, ils sont alors éliminés ou ont une énergie inférieure à l'énergie de seuil de cathodoluminescence des matériaux luminescents correspondants et sont aussi éliminés.

L'écran est adressé de façon séquentielle avec un nombre de circuits de commande réduit : le nombre de familles de lignes additionné au nombre d'anodes (trois par zones et k zones) reste très inférieur au nombre de lignes de l'écran.

A chaque instant, les électrons émis par les micropointes sont focalisés sur l'anode de la couleur sélectionnée, garantissant ainsi une pureté des couleurs non dégradées par les phénomènes d'émission latérale des électrons issus des micropointes.

Dans ces modes de réalisation du procédé d'adressage, les trois couleurs primaires de l'écran ne sont jamais affichées en même temps. La sensation de couleur sur un large spectre perçue par un observateur de l'écran est due à une reconstitution du spectre coloré par l'oeil du spectateur. L'oeil est un détecteur "lent" par rapport aux divers temps caractéristiques d'affichage de l'écran (temps de trame T, ...) et la perception de pleine couleur est due à un effet de moyenne sur plusieurs trames de l'image.

Pour un écran monochrome, un procédé d'adressage consiste à effectuer les opérations suivantes, pour afficher une trame de l'écran, cet affichage s'effectuant pendant un temps de trame T :

- porter successivement chacune des anodes Ai, i allant de 1 à k, à un potentiel VAmax pendant un temps d'adressage tZ, tel que T = ktZ ; quand elles ne sont pas portées au potentiel VAmax suffisant pour attirer les électrons éventuellement émis par les micropointes, les anodes Ai sont portées à un potentiel VAmin, tel que les électrons émis par les micropointes sont repoussés ou ont une énergie inférieure à l'énergie de seuil de cathodoluminescence du matériau luminescent,

- pendant le temps d'adressage tZ de chaque anode Ai, porter successivement chaque famille de lignes à un potentiel VGmax pendant un temps de sélection de ligne t, tel que t = T/N, quand elles ne sont pas portées au potentiel VGmax, les familles de lignes sont portées à un potentiel VGmin, tel que les micropointes n'émettent pas d'électrons,

- pendant le temps de sélection de ligne t de chaque famille de lignes, adresser les conducteurs cathodiques de manière à "allumer" les pixels de la ligne qui doivent l'être.

Les caractéristiques et avantages de l'invention apparaîtront mieux après la description qui suit, donnée à titre explicatif et nullement limitatif. Cette description se réfère à des dessins annexés, sur lesquels :

- la figure 1, déjà décrite, représente schématiquement un écran trichrome fluorescent à micropointes tel que pourrait l'extrapoler un homme du métier,

- la figure 2, déjà décrite, représente schématiquement une section d'un écran trichrome fluorescent à micropointes tel que pourrait l'extrapoler un homme du métier, selon la figure 1,

- la figure 3A représente schématiquement une portion d'un écran trichrome selon l'invention, la figure 3B représente une section selon l'axe aa' de cet écran,

- la figure 4 représente à plus grande échelle que sur la figure 3, schématiquement et partiellement deux lignes successives d'un écran trichrome selon l'invention,

- la figure 5 représente schématiquement les chronogrammes se rapportant à l'adressage d'une des trois séries d'anodes selon un premier procédé d'adressage d'un écran trichrome selon l'invention,

- la figure 6 représente schématiquement les chronogrammes se rapportant au premier procédé d'adressage d'un pixel d'un écran trichrome selon l'invention,

- la figure 7 représente schématiquement les chronogrammes se rapportant à l'adressage d'une des trois séries d'anodes selon un second procédé d'adressage d'un écran trichrome selon l'invention,
- la figure 8 représente schématiquement les chronogrammes se rapportant au second procédé d'adressage d'un pixel d'un écran trichrome selon l'invention,
- la figure 9 représente schématiquement une portion d'un écran monochrome fluorescent à micropointes selon l'invention,
- la figure 10 représente schématiquement les chronogrammes se rapportant à un procédé d'adressage d'un pixel d'un écran monochrome selon l'invention.

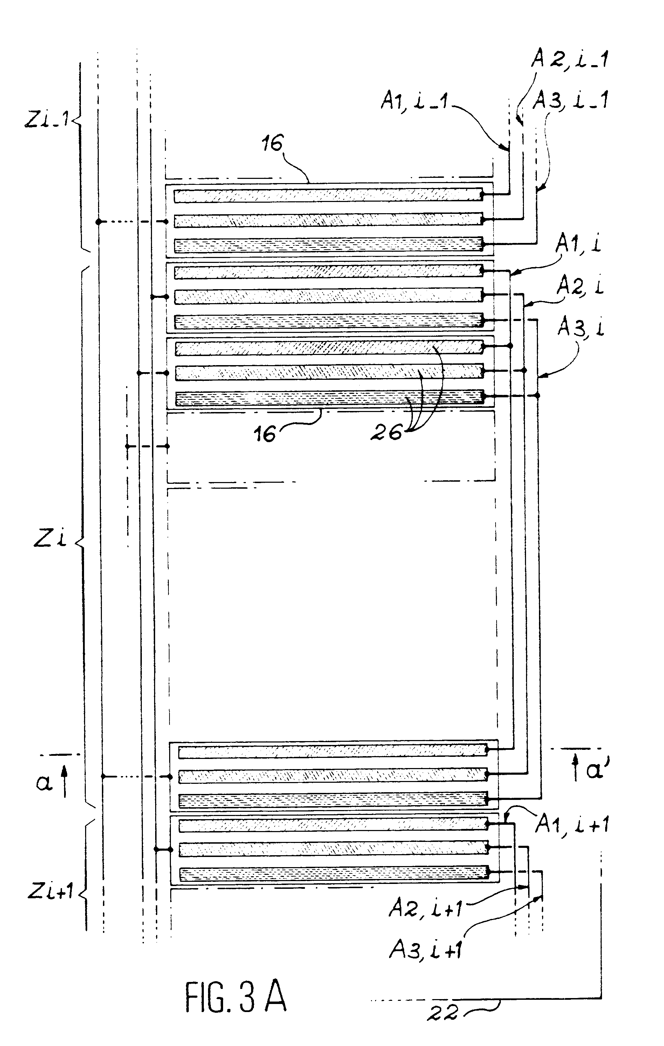

La figure 3A représente schématiquement une portion d'un écran trichrome selon l'invention. L'écran est vu à travers le second substrat 22 transparent représenté schématiquement. L'écran est divisé en k zones Zi, i allant de 1 à k, trois d'entre elles, référencées Zi-1, Zi et Zi + 1 étant au moins en partie visibles sur la figure 3A. Sur le substrat 22 reposent 3N bandes conductrices 26 parallèles, N étant le nombre de lignes de l'écran. Ces bandes 26 sont en oxyde d'étain et d'indium par exemple. Ces bandes conductrices 26 sont regroupées et reliées électriquement pour former trois séries de N/k bandes chacune par zone Zi, correspondant à trois anodes A1,i, A2,i et A3,i. Chacune de ces bandes 26 est recouverte par un matériau luminescent. La figure 3B représente schématiquement une section de l'écran trichrome selon l'invention. Cette section est pratiquée suivant l'axe aa' représenté sur la figure 3A. Sur le premier substrat 10 en verre par exemple, les éléments sont les mêmes, et sont disposés de la même manière que dans l'art antérieur. Les conducteurs cathodiques 12 sont alignés suivant les colonnes de l'écran. Ces conducteurs cathodiques 12 supportent les micropointes 14. Les grilles 16 suivant les lignes de l'écran croisent les conducteurs cathodiques 12. Les grilles 16 (lignes) et les conducteurs cathodiques 12 (colonnes) sont séparés par une couche isolante 18 pourvue d'ouvertures permettant le passage des micropointes.

Le second substrat 22 transparent et isolant en verre par exemple supporte les bandes conductrices 26 alignées sur les grilles 16 donc alignées suivant les lignes de l'écran. Ces bandes conductrices 26 sont recouvertes de matériaux luminescent. Suivant l'axe aa', la bande 26 représentée sur la figure 3B est recouverte d'un matériau 28 luminescent dans le rouge par exemple.

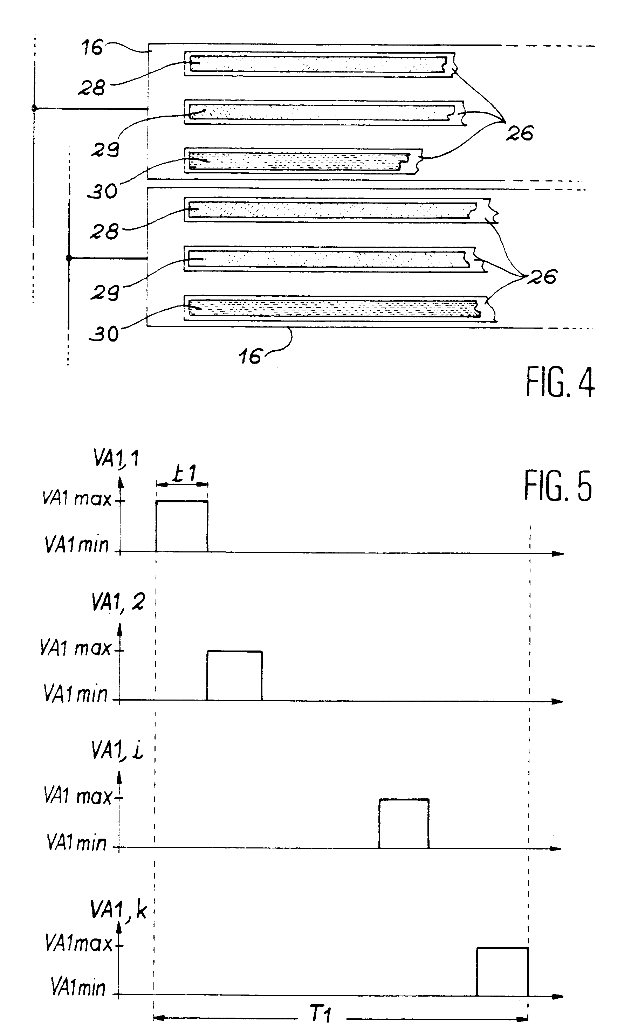

Comme on le voit sur la figure 4, une première série de ces bandes 26 est recouverte par un matériau 28 luminescent dans le rouge, $Y_2O_2S$ dopé Eu par exemple et forme une anode référencée A1,i par exemple pour la zone Zi, une deuxième série de ces bandes 26 est recouverte par un matériau 29 luminescent dans le vert, ZnS dopé CuAl par exemple et forme une anode référencée A2,i par exemple pour la zone Zi, la dernière série de bandes 26 est recouverte par un matériau 30 luminescent dans le bleu, ZnS dopé Ag par exemple et forme une anode référencée A3,i par exemple pour la zone Zi.

Les bandes 26 des différentes séries sont alternées et équidistantes.

Chaque triplet formé par une anode de chaque série est en vis-à-vis d'une grille 16 (ligne). Les grilles 16 reposent sur un second substrat 10 (non représenté figures 3A et 4). Les grilles 16 croisent des conducteurs cathodiques 12 (non représentés figures 3A et 4). Les grilles 16 et les conducteurs cathodiques 2 sont séparés par une couche isolante 16 (non représentée figures 3A et 4). Chaque croisement d'une grille 16 et d'un conducteur cathodique 12 forme un pixel trichrome.

Les grilles 16 (suivant les lignes) de l'écran sont regroupées en N/k familles. Une zone Zi de l'écran comporte une seule grille 16 de chaque famille. Les grilles 16 des différentes familles sont alternées à l'intérieur d'une zone Zi, d'autre part, les grilles 16 de la même famille sont reliées électriquement entre elles.

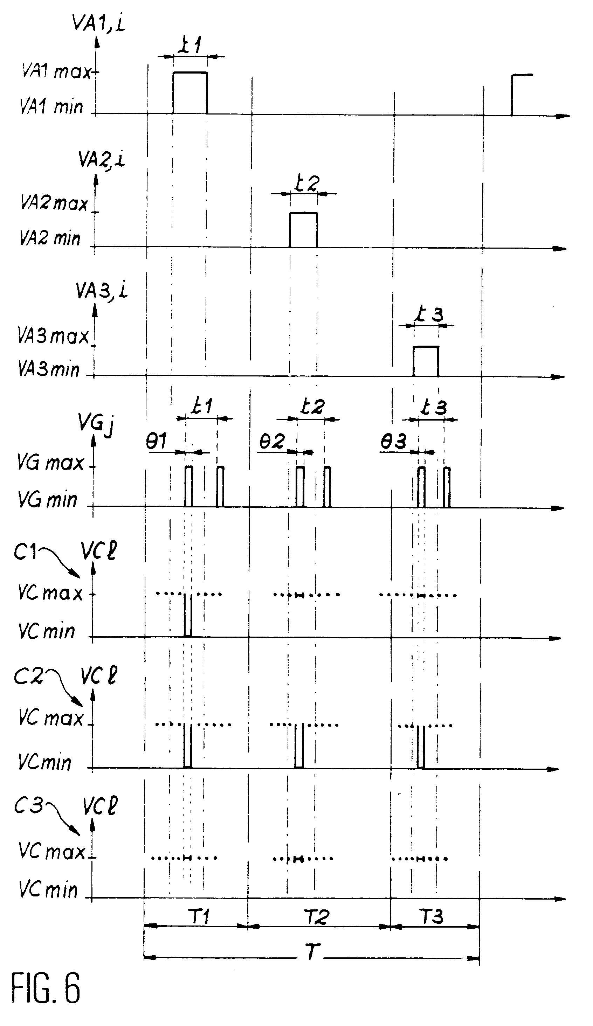

Premier exemple de procédé d'adressage d'un écran trichrome fluorescent à micropointes selon l'invention (figures 5 et 6).

Ce procédé consiste à diviser le temps d'affichage d'une trame T en trois :
- un temps de sous trame T1 correspond à l'affichage d'une première trame, rouge par exemple, de l'écran,
- un temps de sous trame T2 correspond à l'affichage d'une deuxième trame, verte par exemple, de l'écran,
- un temps de sous trame T3 correspond à l'affichage d'une troisième trame, bleue par exemple, de l'écran.

T1, T2, T3 sont reliés par la relation :

$$T1 + T2 + T3 = T$$

Les trames rouge, verte et bleue de l'image sont affichées successivement.

Comme on le voit sur la figure 5, à l'intérieur du temps de sous trame T1 (respectivement T2, T3), pendant lequel est affichée la trame rouge (respectivement verte, bleue) par exemple de l'écran, les k anodes des zones Z1,..., Zk correspondant à la couleur rouge (respectivement verte, bleue), référencées A1,i (respectivement (A2,i, A3,i) par exemple sont adressées successivement. Cet adressage consiste à porter chaque anode A1,i (respectivement A2,i, A3,i) successivement à un potentiel VA1max (respectivement VA2max, VA3max) pendant un temps t1 (respectivement t2, t3). Ce potentiel VA1max (respectivement VA2max, VA3max) est suffisant pour attirer les électrons éventuellement émis par les micropointes avec une énergie supérieure à l'énergie seuil de cathodoluminescence du matériau 28 (respectivement 29, 30) luminescent dans le rouge (respectivement vert, bleu). En dehors du temps d'adressage t1, les anodes A1,i (respectivement A2,i, A3,i) sont portées à un potentiel VA1min (respectivement VA2min, VA3min) tel que les électrons émis par les micropointes sont repoussés et éliminés par l'intermédiaire d'une grille 16 ou ont une énergie inférieure à l'énergie de seuil de cathodoluminescence du matériau luminescent correspondant et sont aussi éliminés.

Le temps de sous trame T1 (respectivement T2, T3) est relié au temps d'adressage t1 (respectivement t2, t3) d'une anode A1,i (respectivement A2,i, A3,i) par la relation :

T1 = kt1 (respectivement : T2 = kt2, T3 = kt3).

Les temps de trame T1, T2, T3 ainsi que les valeurs des potentiels d'adressage des anodes sont ajustés expérimentalement en fonction des matériaux 28, 29, 30 luminescents de manière à obtenir un blanc pur lorsque tout l'écran est adressé.

La figure 6 représente schématiquement les chronogrammes se rapportant au premier procédé d'adressage d'un pixel d'un écran trichrome selon l'invention.

L'affichage d'une trame trichrome de l'écran se fait dans un temps de trame T divisé en trois temps de sous trame T1, T2 et T3 correspondant à l'affichage respectif d'une trame rouge, verte et bleue.

On n'a représenté figure 6, que l'adressage des anodes A1,i, A2,i, A3,i de la zone Zi. Ces adressages se font pendant des durées d'adressage respectives t1, t2, t3 qui se situent la première à l'intérieur de la trame rouge, la deuxième à l'intérieur de la trame verte, la troisième à l'intérieur de la trame bleue.

Les grilles 16 sont adressées par familles. Les pixels concernés à chaque adressage d'une famille de lignes sont ceux correspondant à la superposition d'une ligne de la famille adressée avec l'anode sélectée.

Les familles de lignes Gj, j allant de 1 à N/k, sont portées à un potentiel VGj.VGj prend une valeur VGmax pendant un temps de sélection de ligne $\theta$ 1, périodiquement à la période t1, ceci pendant tout le temps de trame T1, puis VGj prend la valeur VGmax pendant un temps de sélection de ligne $\theta$2, périodiquement à la période t2, ceci pendant tout le temps de trame T2, puis VGj prend la valeur VGmax pendant un temps de sélection de ligne $\theta$3, périodiquement à la période t3, ceci pendant tout le temps de trame T3. VGj en dehors des temps de sélection de ligne prend la valeur VGmin ne permettant pas l'émission des électrons par les micropointes 14.

Les temps d'adressage t1, t2, t3 sont reliés aux temps de sélection de ligne $\theta$1, $\theta$2, $\theta$3 par les relations :

$t1/\theta1 = t2/\theta2 = t3/\theta3 = N/k$

L'"allumage" des pixels positionnés sur la ligne de la famille Gj en regard des anodes de la zone Zi est commandé par le potentiel appliqué sur les conducteurs cathodiques 12.

Les trois chronogrammes C1, C2, C3 de la figure 6 représentent les signaux de commande VCl du conducteur cathodique 12 de numéro l dans la matrice permettant d'"allumer" le pixel correspondant au croisement de la ligne de la famille Gj dans la zone Zi avec le conducteur cathodique 12 de numéro l ; ce pixel est indicé ijl.

Chronogramme C1 : pixel ijl "allumé" dans la couleur rouge,

Pour allumer le pixel ijl en rouge, le potentiel de commande VCl du conducteur cathodique 12 de numéro l prend une valeur VCmin pendant le temps de sélection $\theta$1 de la ligne de la famille Gj dans la zone Zi. La différence de potentiel VGmax-VCmin permet l'émission des électrons par les micropointes 14. Le pixel ijl est éteint dans les deux autres couleurs puisque le potentiel VCl prend alors la valeur VCmax ne permettant pas l'émission des électrons par les micropointes 14 pendant les temps de sélection $\theta$2 et $\theta$3 de la ligne de la famille Gj.

Chronogramme C2 : pixel ijl "allumé" dans les trois couleurs primaires rouge, vert, bleu = pixel ijl "blanc"

A chaque sélection de la ligne correspondant au pixel ijl, le potentiel VCl prend la valeur VCmin. Le pixel ijl prend successivement les couleurs rouge, vert, bleu, la "couleur blanche" est restituée par la persistance rétinienne de l'oeil d'un observateur.

Chronogramme C3 : pixel ijl "éteint", pixel ijl "noir".

A chaque sélection de la ligne correspondant au pixel ijl, le potentiel VCl est maintenu à la valeur VCmax : aucune couleur n'est "allumée".

Exemple de données numériques correspondant au premier procédé d'adressage d'un écran trichrome selon l'invention :

N =     nombre de lignes = 500

k =     nombe de zones = 20

T =     temps de trame = 20 ms

T1 =     temps de trame rouge = 5 ms

T2 =     temps de trame verte = 5 ms

T3 =     temps de trame bleue = 10 ms

t1 =     temps d'adressage d'une anode rouge dans une zone = 5 ms/20 = 0,25 ms

t2 =     temps d'adressage d'une anode verte dans une zone = 5 ms/20 = 0,25 ms

t3 =     temps d'adressage d'une anode bleue dans une zone = 10 ms/20 = 0,5 ms

$\theta1$ =     temps de sélection d'une famille de lignes pendant l'adressage d'une anode rouge = 0,25 ms/25 = 10 $\mu$s

$\theta2$ =     temps de sélection d'une famille de lignes pendant l'adressage d'une anode verte = 10 $\mu$s

$\theta3$ =     temps de sélection d'une famille de lignes pendant l'adressage d'une anode bleue = 20 $\mu$s

VA1 =     potentiel d'adressage des anodes A1,i :

    VA1min = 40 V

    VA1max = 100 V

VA2 =     potentiel d'adressage des anodes A2,i :

    VA2min = 40 V

    VA2max = 100 V

VA3 =     potentiel d'adressage des anodes A3,i :

    VA3min = 40 V

    VA3max = 150 V

VGj =     potentiel d'adressage d'une famille de lignes :

    VGmin = -40 V

    VGmax = 40 V

VCl =     potentiel de commande de la colonne l :

    VCmin = -40 V

    VCmax = 0 V

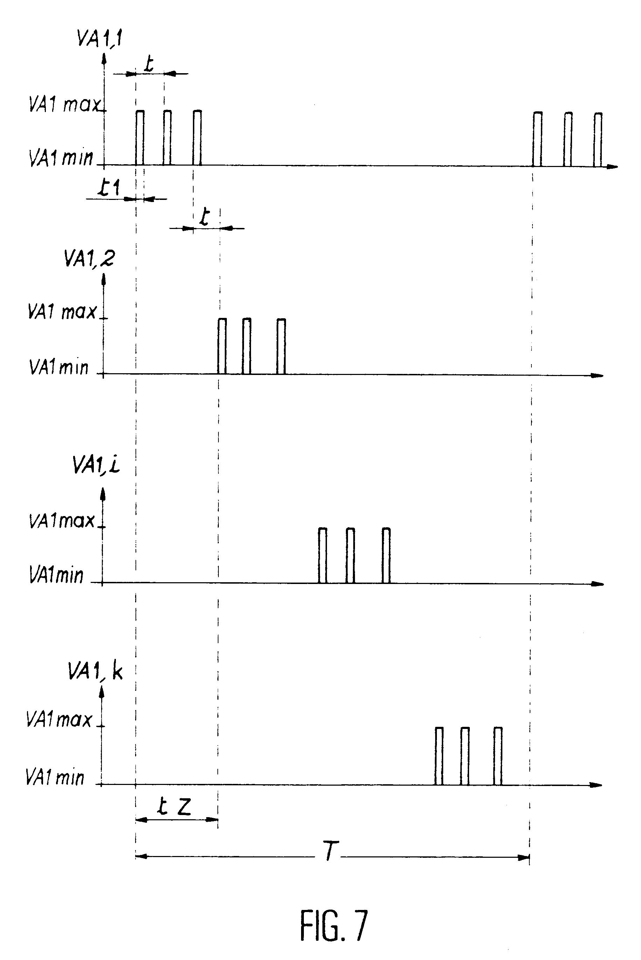

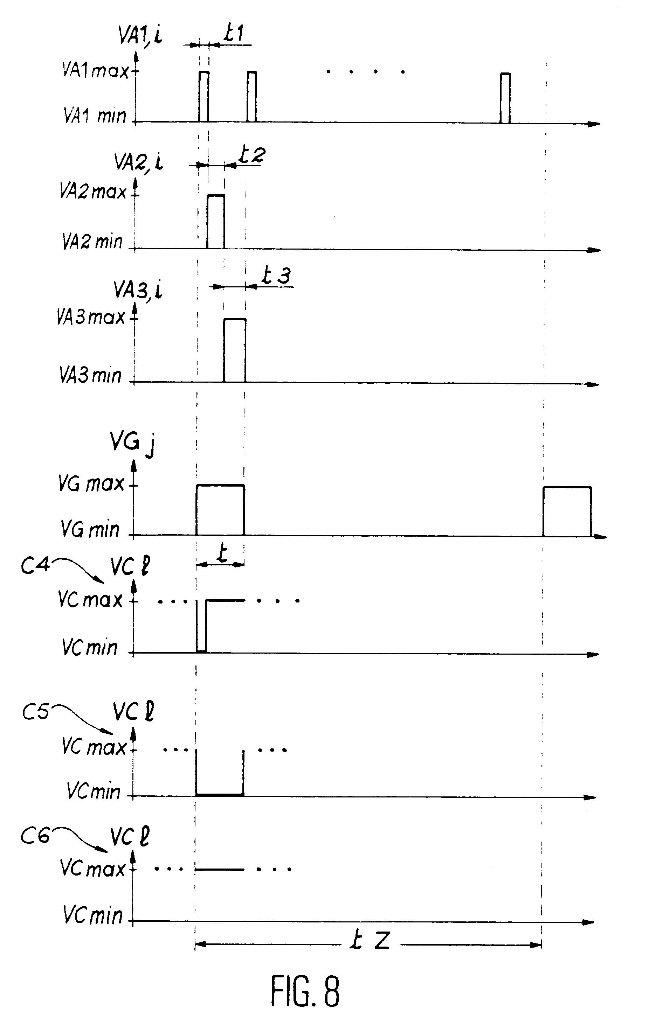

Second exemple de procédé d'adressage d'un écran trichrome fluorescent à micropointes selon l'invention (figures 7 et 8).

Ce procédé consiste à adresser les trois couleurs primaires pour chaque pixel, ligne par ligne.

La figure 7 représente les séquences d'adressage des anodes A1,1,...A1,k des zones Z1,... Zk respectivement.

Les anodes A1,i, A2,i, A3,i, i allant de 1 à k sont adressées successivement.

Le temps de trame T d'affichage est divisé en temps de zone tZ pendant lesquels toutes les lignes d'une zone sont adressées. Le temps de trame T et le temps de zone tZ sont reliés par la relation :

$$T = k.tZ$$

Chaque anode A1,i (respectivement A2,i, A3,i) est adressée pendant un temps d'adressage t1 (respectivement t2, t3), ceci pendant le temps de zone tZ et à la période d'un temps de trame T.

Pendant le temps de zone tZ, une anode A1,i (respectivement A2,i, A3,i) est portée, périodiquement et pendant un temps d'adressage t1 (respectivement t2, t3) à un potentiel VA1max (respectivement VA2max, VA3max) suffisant pour attirer les électons émis par les micropointes 14 avec une énergie supérieure à l'énergie-seuil de cathodoluminescence du matériau 28 (respectivement 29, 30). La période est ici t le temps de sélection d'une ligne dans une zone. Le temps de zone est donc relié au temps de sélection de ligne t par la relation :

$$tZ = N/k.t$$

Les temps d'adressage t1, t2, t3 des anodes A1,i, A2,i, A3,i respectivement sont reliés au temps de sélection de ligne t par la relation :

$$t1 + t2 + t3 = t$$

En dehors des temps d'adressage les anodes A1,i (respectivement A2,i, A3,i) sont portées à un potentiel VA1min (respectivement VA2min, VA3min) tel que les électrons émis par les micropointes 14 sont repoussés vers les grilles 16 et éliminés ou ont une énergie inférieure à l'énergie de seuil de cathodoluminescence du matériau luminescent correspondant et sont aussi éliminés.

La figure 8 représente schématiquement les chronogrammes se rapportant au second procédé d'adressage d'un pixel d'un écran trichrome selon l'invention.

L'affichage d'une trame trichrome de l'écran se fait en un temps de trame T. Ce dernier est divisé en temps de zone tZ. Dans un temps de zone tZ, toutes les lignes d'une zone sont adressées successivement.

Les chronogrammes de la figure 8 représentent l'adressage du pixel ijl.

Les familles de lignes Gj, j allant de 1 à N/k, sont portées successivement à un potentiel VGmax. VGj prend une valeur VGmax pendant le temps de sélection de ligne t, à la période tZ.

Durant le temps de sélection de ligne t, les trois anodes A1,i, A2,i, A3,i de la zone Zi sont donc adressées successivement pendant des temps d'adressage respectifs t1, t2, t3.

L'"allumage" des pixels positionnés sur la ligne de la famille Gj en regard des anodes de la zone Zi est commandé par le potentiel appliqué sur les conducteurs cathodiques 12.

Les trois chronogrammes C4, C5, C6 de la figure 8 représentent les signaux de commande VCl du conducteur cathodique 12 de numéro l permettant d'"allumer" le pixel ijl.

Chronogramme C4 : pixel ijl "allumé" dans la couleur rouge,

Pour "allumer" le pixel ijl sélectionné dans la couleur rouge, le potentiel VCl de commande du conducteur cathodique 12 de numéro l prend la valeur VCmin pendant le temps d'adressage t1 de l'anode A1,i. VCl est maintenu à la valeur VCmax pendant les temps d'adressage t2 et t3 des anodes A2,i et A3,i (correspondant aux couleurs verte et bleue).

Chronogramme C5 : pixel ijl "allumé" dans les trois couleurs primaires rouge, vert, bleu = pixel ijl "blanc",

Le potentiel VCl est maintenu à la valeur VCmin pendant tout le temps de sélection de ligne, ceci permettant l'émission des électrons par les micropointes 14 pendant chaque temps d'adressage t1, t2 et t3 des anodes A1,i, A2,i et A3,i.

Chronogramme C6 : pixel ijl "éteint", pixel ijl "noir".

Cette fois le potentiel VCl est maintenu pendant le temps de sélection ligne à la valeur VCmax ne permettant pas l'émission des électrons : le pixel ijl est "noir".

Exemple de données numériques correspondant au second procédé d'adressage d'un écran trichrome selon l'invention.

N = nombre de lignes = 500
k = nombe de zones = 20
T = temps de trame = 20 ms
tZ = temps de zone = 1 ms
t = temps de sélection de ligne = 1 ms/25 = 40$\mu$s
t1 = temps d'adressage d'une anode A1,i = 10 $\mu$s
t2 = temps d'adressage d'une anode A2,i = 10 $\mu$s
t3 = temps d'adressage d'une anode A3,i = 20 $\mu$s
VA1 = potentiel d'adressage des anodes A1,i :
VA1min = 40 V
VA1max = 100 V
VA2 = potentiel d'adressage des anodes A2,i :
VA2min = 40 V
VA2max = 100 V
VA3 = potentiel d'adressage des anodes A3,i :
VA3min = 40 V
VA3max = 150 V
VGj = potentiel d'adressage d'une famille de lignes :
VGmin = -40 V
VGmax = +40 V
VCl = potentiel de commande de la colonne l :
VCmin = -40 V
VCmax = 0 V

Un écran trichrome fluorescent à micropointes selon l'invention de 575 lignes et 720 colonnes (standard de la télévision française) peut fonctionner avec 23 familles de lignes, 25 anodes rouges, 25 anodes vertes, 25 anodes bleues et 720 conducteurs cathodiques soit 818 sorties à commander chacune par un circuit électrique différent. Ceci est à comparer avec un écran tel que pourrait l'extrapoler un homme de métier (figures 1 et 2), c'est-à-dire 575 grilles et 3x720 conducteurs cathodiques, soit 2735 sorties à commander chacune par un circuit électrique différent.

A un instant donné, tous les électrons émis sont : soit repoussés vers une grille ou ont une énergie inférieure à l'énergie de seuil de cathodoluminescence du matériau luminescent, soit attirés par un phosphore luminescent dans une couleur primaire donnée. L'émission électronique latérale des micropointes 14 n'engendre donc pas de phénomène de diaphonie caractérisée par un délavage des couleurs.

L'invention peut aussi s'appliquer à des écrans fluorescents monochromes à micropointes.

L'écran est divisé en k zones Zi, i allant de 1 à k et les N lignes sont regroupées en N/k familles. Les lignes (grilles 16) d'une même famille sont reliées électriquement entre elles. Chaque zone Zi ne comprend qu'une seule ligne de chaque famille. Les lignes 16 de chaque famille se succèdent à l'intérieur d'une zone Zi.

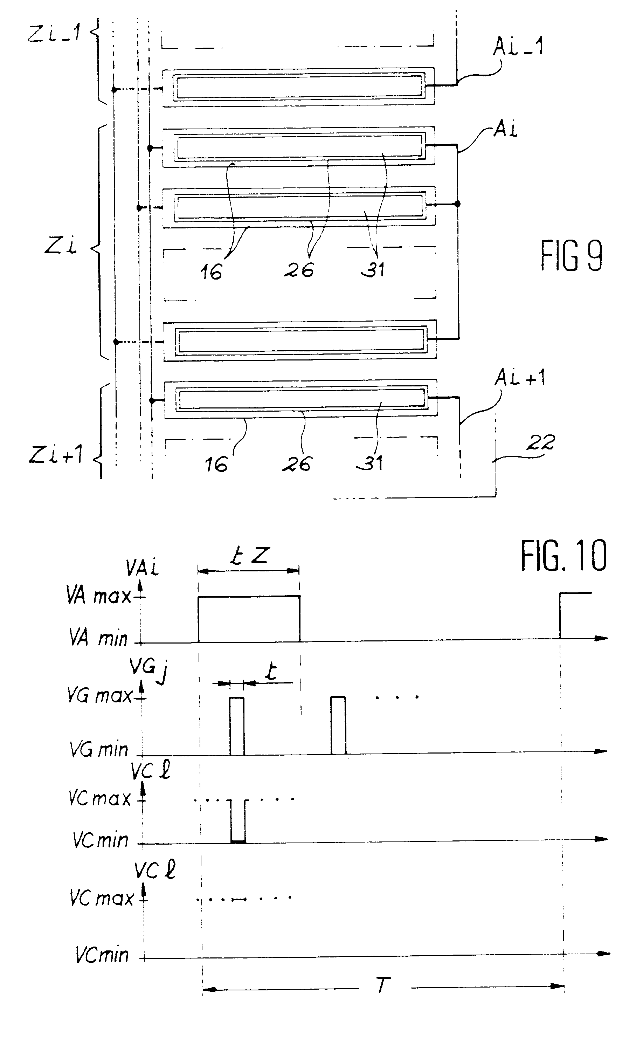

La figure 9 représente schématiquement une portion d'un écran monochrome selon l'invention. L'écran est vu à travers le second substrat 22 transparent représenté schématiquement. Sur ce substrat 22 reposent N bandes conductrices 26, reliées électriquement par groupes de N/k bandes 26 pour former k anodes Ai : une anode Ai par zone Zi.

Les anodes Ai sont recouvertes d'un matériau 31 luminescent de ZnS par exemple.

De la même manière que pour un écran trichrome, les bandes 26 sont en regard des grilles 16 (lignes) ; les grilles 16 croisent des conducteurs cathodiques 12 (non représentés figure 9) ; les grilles 16 et les conducteurs cathodiques 12 sont séparés par une couche isolante 16 (non représentée figure 9). Chaque croisement d'une ligne (grille 16) et d'une colonne (conducteur cathodique 12) forme un pixel.

La section d'un tel écran monochrome suivant un axe le long d'une bande conductrice 26 est identique à la section d'un écran trichrome représentée figure 3B, le matériau 31 luminescent remplace le matériau 28. Un seul matériau 31 luminescent est déposé sur chaque bande 26 conductrice.

Exemple de procédé d'adressage d'un écran monochrome selon l'invention (figure 10).

Les chronogrammes se rapportant à ce procédé d'adressage sont représentés schématiquement figure 10. Ils concernent l'"allumage" du pixel ijl situé au croisement de la ligne de la famille Gj dans la zone Zi avec le conducteur cathodique (colonne) de numéro I dans la matrice.

L'affichage d'une trame d'une image se fait pendant un temps de trame T.

Les anodes Ai, i allant de 1 à k, sont adressées successivement pendant un temps d'adressage tZ. L'adressage d'une anode Ai consiste à porter le potentiel VAi délivré sur cette anode à la valeur VAmax pendant le temps d'adressage tZ. Le potentiel VAmax est tel qu'il attire les électrons éventuellement émis par les micropointes 14 avec une énergie supérieure à l'énergie seuil de cathodoluminescence du matériau 31. En dehors du temps d'adressage tZ le potentiel VAi est maintenu à une valeur VAmin telle que les électrons émis par les micropointes sont repoussés vers une grille 16 ou ont une énergie inférieure à l'énergie de seuil de cathodoluminescence du matériau luminescent.

Une famille de lignes Gj est adressée périodiquement pendant un temps de sélection de ligne t. Le potentiel VGj délivré sur la famille de lignes Gj prend alors la valeur VGmax pendant t à la période tZ. Les différentes familles de lignes sont adressées successivement au cours de la période tZ. Le potentiel VGmax permet l'émission des électrons ; en dehors du temps de sélection de ligne, VGj prend la valeur VGmin qui ne permet pas l'émission d'électrons.

Pendant le temps d'adressage t de la ligne de la famille Gj dans la zone Zi, le potentiel VCl appliqué sur le conducteur cathodique de numéro I prend une valeur Vcmin pour l'"allumage" du pixel ijl et une valeur VCmax si le pixel doit rester "éteint". En effet, VCmin est tel que la différence de potentiel VGmax-VCmin est suffisante pour arracher des électrons aux micropointes alors que VGmax-VCmax ne l'est pas.

Exemple de données numériques se rapportant à ce procécé d'adressage.

N = nombre de lignes = 500
k = nombre de zones = 20
T = temps de trame = 20 ms
tZ = temps d'adressage d'une anode Ai = 1 ms
t = temps de sélection de ligne = 40 $\mu$s
VAi = potentiel d'adressage de l'anode Ai :
VAmax = 100 V
VAmin = 40 V
VGj = potentiel d'adressage d'une famille de lignes Gj :
VGmax = 40 V
VGmin = -40 V
VCl = potentiel de commande de la colonne I :
VCmax = 0 V
VCmin = -40 V

Ce type d'écran monochrome ne nécessite que N/k circuits d'adressage pour les familles de lignes, k circuits d'adressage pour les anodes et bien sûr M circuits de commande des conducteurs cathodiques (pour un écran de M colonnes), un écran fluorescent monochrome à micropointes selon l'art antérieur ayant besoin de N circuits d'adressage pour les lignes et M circuits d'adressage pour les colonnes, le gain peut donc être important.

Pour réaliser une famille de lignes reliées électriquement entre elles aussi bien que pour réaliser une anode (formée de bandes conductrices 26 reliées électriquement entre elles), on peut par exemple graver dans un matériau conducteur des bandes parallèles de dimensions appropriées. On relie électriquement les différentes bandes de chaque famille de lignes ou de chaque anode par l'intermédiaire d'un film conducteur anisotrope en contact électrique avec un ruban métallique. Ce film n'est conducteur qu'en certains points d'écrasement situés sur les bandes à relier. Les points d'écrasement conducteurs sont reliés entre eux par le ruban métallique.

**Revendications**

1. Ecran fluorescent à micropointes à affichage matriciel comportant un premier substrat (10) isolant sur lequel sont disposées, selon les deux directions de la matrice, des colonnes conductrices (12) formant des conducteurs cathodiques supportant des micropointes (14) métalliques et par-dessus les colonnes, N lignes conductrices (16) perforées formant des grilles, ces lignes et colonnes étant séparées par une couche isolante (18) pourvue d'ouvertures permettant le passage des micropointes (14), chaque croisement d'une ligne et d'une colonne correspondant à un pixel, écran caractérisé en ce qu'il est divisé en k zones Zi, i allant de 1 à k, de N/k lignes (16) successives chacune, les N lignes (16) de l'écran étant regroupées en N/k familles de lignes, chacune des familles de ligne comprenant k lignes, une zone Zi ne comprenant qu'une ligne (16) de chaque famille, les lignes (16) des différentes familles étant alternées à l'intérieur d'une zone Zi, les lignes (16) d'une même famille étant reliées électriquement entre elles ; et en ce que sur un deuxième substrat transparent (22) en regard du premier (10), chaque zone Zi comprend une famille d'anodes en ligne recouvertes d'au moins un matériau luminescent, les familles d'anodes correspondant aux différentes zones Zi étant identiques et électriquement indépendantes entre elles, chaque famille d'anodes d'une zone Zi étant en regard des N/k lignes de la zone Zi.

2. Ecran fluorescent à micropointes à affichage matriciel selon la revendication 1, caractérisé en ce que chaque famille d'anodes d'une zone Si comprend chacune trois séries de N/k bandes conductrices en ligne (26), les bandes (26) des différentes séries se succédant alternativement, formant N/k triplets de bandes, les bandes (26) d'une de ces séries étant recouvertes par un matériau (28) luminescent dans le rouge, les bandes (26) d'une autre de ces séries étant recouvertes par un matériau (29) luminescent dans le vert , les bandes (26) de la dernière série étant recouvertes par un matériau (30) luminescent dans le bleu, chacun des N/k triplets, formé de trois bandes (26) respectivement recouvertes de matériaux (28, 29, 30) luminescents dans le rouge, dans le vert et dans le bleu, étant respectivement aligné sensiblement en regard d'une des N/k lignes conductrices (16) perforées formant des grilles, toutes les bandes (26) de chacune des trois séries dans une zone Si étant reliées électriquement entre elles pour former trois anodes A1,i, A2,i, A3,i.

3. Ecran fluorescent à micropointes à affichage matriciel selon la revendication 1, caractérisé en ce que chaque famille d'anodes d'une zone Zi comprend une série de bandes (26) conductrices recouvertes par un matériau (31) luminescent, chaque bande conductrice (26) étant sensiblement alignée en regard d'une ligne (16) (grille), les bandes conductrices (26) d'une zone Zi étant reliées électriquement entre elles pour former une anode Ai.

4. Procédé d'adressage d'un écran fluorescent à micropointes conçu selon la revendication 2, l'affichage d'une trame trichrome de l'image se faisant pendant un temps de trame T, caractérisé en ce qu'il consiste à effectuer les opérations suivantes pour les anodes A1,i, i allant de 1 à k successives ; et répéter tes opérations pour les anodes A2,i puis A3,i de manière à afficher pendant un temps de trame T trois images monochromes dans les trois couleurs primaires rouge, vert, bleu :
  - porter successivement chacune des anodes A1,i (respectivement A2,i, A3,i) des zones Zi, i allant de 1 à k, à un potentiel VA1max (respectivement VA2max, VA3max) suffisant pour attirer les électrons éventuellement émis par les micropointes avec une énergie supérieure à l'énergie seuil de cathodoluminescence du matériau (28, 29, 30) luminescent correspondant, pendant un temps d'adressage t1 (respectivement t2, t3), périodiquement à une période correspondant au temps de trame T, tel que $T = k \cdot (t1 + t2 + t3)$ ; quand les anodes A1,i (respectivement A2,i, A3,i) ne sont pas portées au potentiel VA1max (respectivement VA2max, VA3max) les anodes A1,i (respectivement A2,i, A3,i) sont portées à un potentiel VA1min (respectivement VA2min, VA3min) tel que les électrons émis par les micropointes (14) sont repoussés, ou ont une énergie inférieure à une énergie de seuil de cathodoluminescence du matériau luminescent correspondant,
  - pendant le temps d'adressage t1 (respectivement t2, t3) de chaque anode A1,i (respectivement A2,i, A3,i), porter successivement les différentes familles de lignes à un potentiel VGmax pendant un temps de sélection de ligne $\theta 1$ (respectivement $\theta 2$, $\theta 3$, avec $\theta 1 + \theta 2 + \theta 3 = T/N$) ; quand elles ne sont pas portées au potentiel VGmax, les différentes familles de lignes sont portées à un potentiel VGmin tel que les micropointes (14) n'émettent pas d'électrons,
  - pendant le temps de sélection de ligne $\theta 1$ (respectivement $\theta 2$, $\theta 3$) de chaque

ligne (16) de chaque zone Zi, adresser les conducteurs cathodiques (12) de manière à "allumer" les pixels qui doivent l'être.

5. Procédé d'adressage d'un écran fluorescent à micropointes selon la revendication 2, l'affichage d'une trame trichrome de l'image se faisant pendant un temps de trame T, caractérisé en ce qu'il consiste, pour l'affichage d'une trame trichrome, à effectuer les opérations suivantes pour chacune des zones Zi,i allant de 1 à k successives :
   - porter successivement les familles de lignes à un potentiel VGmax pendant un temps de sélection de ligne t, tel que $t = T/N$, quand elles ne sont pas portées au potentiel VGmax, les familles de lignes sont portées au potentiel VGmin tel que les micropointes (14) n'émettent pas d'électrons,
   - pendant le temps de sélection t de chaque ligne (16) de la zone Zi concernée, porter successivement les anodes A1,i, A2,i, A3,i respectivement à des potentiels VA1max, VA2max, VA3max, suffisants pour attirer les électrons éventuellement émis par les micropointes avec une énergie supérieure à l'énergie seuil de cathodoluminescence des matériaux (28, 29, 30) luminescents correspondants pendant des temps d'adressage respectifs t1, t2, t3, tels que $t1 + t2 + t3 = t$ ; quand elle ne sont pas portées aux potentiels VA1max, VA2max, VA3max les anodes A1,i, A2,i, A3,i sont portées aux potentiels VA1min, VA2min, VA3min respectivement, potentiels VA1min,VA2min, VA3min tels que les électrons émis par les micropointes sont repoussées, ou ont une énergie inférieure à une énergie de seuil de cathodoluminescence du matériau luminescent correspondant,
   - pendant le temps d'adressage t1, t2, t3 de chaque anode A1,i, A2,i, A3,i, adresser les conducteurs cathodiques (12) de manière à "allumer" les pixels qui doivent l'être.

6. Procédé d'adressage d'un écran fluorescent à micropointes selon la revendication 3, l'affichage d'une trame de l'image se faisant pendant un temps de trame T, caractérisé en ce qu'il consiste, pour afficher une trame de l'écran, à effectuer les opérations suivantes :
   - porter successivement chacune des anodes Ai, i allant de 1 à k, à un potentiel VAmax pendant un temps d'adressage tZ, tel que $tZ = T/k$, quand elles ne sont pas portées au potentiel VAmax suffisant pour attirer les électrons éventuellement émis par les micropointes (14), les anodes Ai sont portées à un potentiel VAmin, tel que les électrons émis par les micropointes (14) sont repoussés, ou ont une énergie inférieure à une énergie de seuil de cathodoluminescence du matériau luminescent correspondant,
   - pendant le temps d'adressage tZ de chaque anode Ai, porter successivement chaque famille de lignes à un potentiel VGmax pendant un temps de sélection de ligne t, tel que $t = T/N$, quand elle ne sont pas portées au potentiel VGmax, les familles de lignes sont portées à un potentiel VGmin, tel que les micropointes (14) n'émettent pas d'électron,
   - pendant le temps de sélection de ligne t de chaque famille de lignes, adresser les conducteurs cathodiques (12) de manière à "allumer" les pixels qui doivent l'être.

## Claims

1. Matrix display microdot fluorescent screen having a first insulating substrate (10) on which are arranged, in accordance with the two directions of the matrix, conductive columns (12) forming cathode conductors supporting metal microdots (14) and above the columns, N perforated conductive rows (16) forming the grids, said rows and columns being separated by an insulating layer (18) having openings permitting the passage of the microdots (14), each intersection of a row and a column corresponding to a pixel, characterized in that the screen is subdivided into k zones Zi, i ranging from 1 to k, having N/k successive rows (16) each, the N rows (16) of the screen being grouped into N/k families of rows, each of the row families having k rows, a zone Zi only having a single row (16) of each family, the rows (16) of the different families alternating within a zone Zi, the rows (16) of the same family being electrically interconnected and in that on a second transparent substrate (22) facing the first (10), each zone Zi comprises a family of anodes in a row covered by at least one luminescent material, the families of anodes corresponding to the different zones Zi being identical and electrically independent of one another, each family of anodes of a zone Zi facing the Nk/k rows of the zone Zi.

2. Matrix display microdot fluorescent screen according to claim 1, characterized in that each family of anodes of a zone Zi comprises three series of N/k conductive bands (26) in a row, the bands (26) of the different series succeeding one another in alternating manner, forming N/k triplets of bands, the bands (26) of one of these series being covered by a material (28) luminescing in the red, the bands (26) of another of these series being covered by a material (29) luminescing in the green and the bands (26) of the final series being covered by a material (30) luminescing in the blue, each of the N/k triplets, formed from three bands (26) respectively covered by materials (28, 29, 30) luminescing in the red, green and blue being respectively aligned substantially facing one of the N/k perforated conductive rows (16) forming grids, all the bands (26) of each of the three series in a zone Zi being electrically interconnected so as to form three anodes A1, i, A2, i, A3,i.

3. Matrix display microdot fluorescent screen according to claim 1, each family of anodes of a zone Zi comprises a series of conductive bands (26) covered by a luminescent material (31), each conductive band (26) being substantially aligned facing a row (16) (grid), the conductive bands (26) of one zone Zi being electrically interconnected to form an anode Ai.

4. Process for addressing a microdot fluorescent screen according to claim 2, the display of a trichromatic frame of the image taking place during a frame time T, characterized in that it consists of performing the following operations for the anodes A1,i, i passing sucessively from 1 to k and repeating these operations for the anodes A2,i and then A3,i so as to display during a frame time T three monochromatic images in the three primary colours red, green, blue:
- successively raising each of the anodes A1,i (respectively A2,i, A3,i) of the zone Zi, i ranging between 1 and k, to a potential VA1max (respectively VA2max, VA3max) adequate for attracting the electrons possibly emitted by the microdots with an energy exceeding the cathodoluminescence threshold energy of the corresponding luminescent material (28, 29, 30), during an addressing time t1 (respectively t2, t3), periodically at a period corresponding to the frame time T, such that $T = k(t1 + t2 + t3)$; when the anodes A1,i (respectively A2,i, A3,i) are not raised to the potential VA1max (respectively VA2max, VA3max) the anodes A1,i (respectively A2,i, A3,i) are raised to a potential Va1min (respectively VA2min, VA3min) such that the electrons emitted by the microdots (14) are forced back or have an energy below the cathodoluminescence threshold energy of the corresponding luminescent material,
- during the addressing time t1 (respectively t2, t3) of each anode A1,i (respectively A1, i, A3, i), successively raising the different families of rows to a potential VGmax during a row selection time $\theta 1$ (respectively $\theta 2$, $\theta 3$ with $\theta 1 + \theta 2 + \theta 3 = T/N$); when they are not raised to the potential VGmax, the different families of rows are raised to a potential VGmin such that the microdots (14) do not emit electrons,
- during the row selection time $\theta 1$ (respectively $\theta 2$, $\theta 3$) of each row (16) of each zone Zi, addressing the cathodic conductors (12) in such a way as to "ignite" the pixels which should be ignited.

5. Process for addressing a microdot fluorescent screen according to claim 2, the display of a trichromatic frame of the image taking place during a frame time T, characterized in that it comprises, for the display of a trichromatic frame, performing the following operations for each of the zones Zi,i from 1 to k in successive manner:
- successively raising the families of rows to a potential VGmax during the row selection time t, such that $t = T/N$, when they are not raised to the potential VGmax, the families of rows are raised to the potential VGmin such that the microdots (14) do not emit electrons,
- during the selection time t of each row (16) of the zone Zi in question, successively raising the anodes A1,i, A2,i, A3,i respectively to potentials VA1max, VA2max, VA3max adequate for attracting the electrons possibly emitted by the microdots with an energy higher than the cathodoluminescence threshold energy of the corresponding luminescent materials (28, 29, 30) for respective addressing times t1, t2, t3, such that $t1 + t2 + t3 = t$; when they are not raised to the potentials VA1max, VA2max, VA3max the anodes A1,i, A2,i, A3,i are raised to potentials VA1min, VA2min, VA3min respectively such that the electrons emitted by the microdots are forced back or have an energy below the cathodoluminescence threshold energy of the corresponding luminescent material,

- during the addressing time t1, t2, t3 of each anode A1,i, A2,i, A3,i addressing the cathodic conductors (12) so as to "ignite" the pixels which should be ignited.

6. Process for addressing a microdot fluorescent screen according to claim 3, the display of a frame of the image taking place during a frame time T, characterized in that it comprises, for displaying a frame of the screen, performing the following operations:
- successively raising each of the anodes Ai, i from 1 to k to a potential VAmax during an addressing time tZ, such that tZ = T/k, when they are not raised to the potential VAmax adequate for attracting the electrons possibly emitted by the microdots (14), the anodes Ai are raised to a potential VAmin such that the electrons emitted by the microdots (14) are forced back or have an energy below the cathodoluminescence threshold energy of the corresponding luminescent material,
- during the addressing time tZ of each anode Ai, successively raising each family of rows to a potential VGmax for a row selection time t such that = T/N, when they are not raised to the potential VGmax, the families of rows are raised to a potential VGmin, such that the microdots (14) do not emit electrons,
- during the row selection time t of each family of rows, addressing the cathodic conductors (12) so as to "ignite" the pixels which should be ignited.

**Patentansprüche**

1. Mikrospitzen-Fluoreszenzbildschirm zur Matrixanzeige, umfassend ein erstes isolierendes Substrat (10), auf dem entsprechend den beiden Richtungen der Matrix leitende Spalten (12), die metallische Mikrospitzen (14) tragende Kathodenleiter bilden, und über den Spalten N durchbohrte leitende Zeilen (16), die Gitter bilden, aufgebracht sind, wobei diese Zeilen und Spalten durch eine isolierende Schicht (18) getrennt sind, die so mit Öffnungen versehen ist, daß die Mikrospitzen (14) hindurchpassen, jede Überkreuzung einer Zeile und einer Spalte dabei einem Rasterpunkt entspricht,

wobei der Bildschirm dadurch gekennzeichnet ist, daß er in k Zonen Zi, wo i von 1 bis k geht, von jeweils N/k aufeinanderfolgenden Zeilen (16) unterteilt ist, wobei die N Zeilen (16) des Bildschirms in N/k Zeilengruppen eingeteilt sind, jede der Zeilengruppen k Zeilen umfaßt, eine Zone Zi nur eine Zeile (16) jeder Gruppe umfaßt, die Zeilen (16) der verschiedenen Gruppen im Innern einer Zone Zi abwechselnd aufeinanderfolgen, die Zeilen (16) ein und derselben Gruppe elektrisch untereinander verbunden sind,

und dadurch, daß auf einem zweiten transparenten Substrat (22) gegenüber dem ersten (10) jede Zone Zi eine Gruppe von zeilenförmigen Anoden umfaßt, die mit wenigstens einem lumineszierenden Material bedeckt sind, wobei die Anodengruppen, die den verschiedenen Zonen Zi entsprechen, identisch und voneinander elektrisch unabhängig sind und jede Anodengruppe einer Zone Zi den N/k Zeilen der Zone Zi gegenübersteht.

2. Mikrospitzen-Fluoreszenzbildschirm zur Matrixanzeige nach Anspruch 1, dadurch gekennzeichnet, daß jede Anodengruppe einer Zone Zi jeweils drei Serien von N/k zeilenförmigen leitenden Streifen (26) umfaßt, wobei die Streifen (26) der verschiedenen Serien abwechselnd aufeinanderfolgen und dabei N/k Dreiergruppen von Streifen bilden, wobei die Streifen (26) einer dieser Serien mit einem im Roten lumineszierenden Stoff (28) bedeckt sind, die Streifen (26) einer anderen dieser Serien mit einem im Grünen lumineszierenden Stoff (29) bedeckt sind, die Streifen (26) der letzten Serie mit einem im Blauen lumineszierenden Stoff (30) bedeckt sind, wobei jede der aus drei Streifen (26), die jeweils mit im Roten, im Grünen und im Blauen lumineszierenden Stoffen (28, 29, 30) bedeckt sind, gebildeten N/k Dreiergruppen in etwa auf jeweils eine der N/k leitenden, durchbohrten und Gitter bildenden Zeilen (16) hin ausgerichtet ist und wobei alle Streifen (26) von jeder der drei Serien in einer Zone Zi elektrisch untereinander verbunden sind, um drei Anoden A1,i, A2,i, A3,i zu bilden.

3. Mikrospitzen-Fluoreszenzbildschirm zur Matrixanzeige nach Anspruch 1, dadurch gekennzeichnet, daß jede Anodengruppe einer Zone Zi eine Serie von leitenden Streifen (26), die mit einem lumineszierenden Stoff (31) bedeckt sind, umfaßt, wobei jeder leitende Streifen (26) in etwa auf eine Zeile (16) (Gitter) hin ausgerichtet ist und die leitenden Streifen (26) einer Zone Zi elektrisch untereinander verbunden sind, um eine Anode Ai zu bilden.

4. Verfahren zur Adressierung eines nach Anspruch 2 aufgebauten Mikrospitzen-Fluoreszenzbildschirms, bei dem die Anzeige eines dreifarbigen Einzelbildes von dem Bild während einer Einzelbildzeit T erfolgt, dadurch gekennzeichnet, daß es darin besteht, für die Anoden A1,i, wobei i von 1 bis k geht, nacheinander die folgenden Operationen durchzuführen und diese Operationen für die Anoden A2,i und dann A3,i zu wiederholen, um während einer Einzelbildzeit T drei monochrome Bilder in den drei Primärfarben Rot, Grün und Blau anzuzeigen:

- nacheinander jede der Anoden A1,i (bzw. A2,i, A3,i) der Zonen Zi, wobei i von 1 bis k geht, auf ein Potential VA1max (bzw. VA2max, VA3max) zu bringen, das ausreicht, um die gegebenenfalls von den Mikrospitzen mit einer Energie, die über der Schwellenenergie der Kathodenlumineszenz des jeweiligen lumineszierenden Materials (28, 29, 30) liegt, emittierten Elektronen anzuziehen, und zwar während einer Adressierungszeit t1 (bzw. t2, t3) periodisch mit einer der Einzelbildzeit T entsprechenden Periode derart, daß $T = k(t1 + t2 + t3)$, wogegen die Anoden A1,i (bzw. A2,i, A3,i), wenn sie nicht auf das Potential VA1max (bzw. VA2max, VA3max) gebracht werden, auf ein Potential VA1min (bzw. VA2min, VA3min) derart gebracht werden, daß die von den Mikrospitzen (14) emittierten Elektronen abgestoßen werden oder eine Energie kleiner als eine Schwellenenergie der Kathodenlumineszenz des jeweiligen lumineszierenden Stoffes haben,
- während der Adressierungszeit t1 (bzw. t2, t3) jeder Anode A1,i (bzw. A2,i, A3,i) nacheinander die verschiedenen Zeilengruppen auf ein Potential VGmax während einer Zeilenauswahlzeit $\theta1$ (bzw. $\theta2$, $\theta3$, mit $\theta1 + \theta2 + \theta3 = T/N$) zu bringen, wogegen die verschiedenen Zeilengruppen, wenn sie nicht auf das Potential VGmax gebracht werden, auf ein Potential VGmin derart gebracht werden, daß die Mikrospitzen (14) keine Elektronen emittieren,
- während der Zeilenauswahlzeit $\theta1$ (bzw. $\theta2$, $\theta3$) für jede Zeile (16) jeder Zone Zi die Kathodenleiter (12) zu adressieren, um die Rasterpunkte, die leuchten sollen, "anzuschalten".

5. Verfahren zur Adressierung eines Mikrospitzen-Fluoreszenzbildschirms nach Anspruch 2, bei dem die Anzeige eines dreifarbigen Einzelbildes von dem Bild während einer Einzelbildzeit T erfolgt, dadurch gekennzeichnet, daß es darin besteht, zur Anzeige eines dreifarbigen Einzelbildes die folgenden Operationen für jede der Zonen Zi, wo i von 1 bis k geht, nacheinander auszuführen:

- die Zeilengruppen nacheinander während einer Zeilenauswahlzeit t derart, daß $t = T/N$, auf ein Potential VGmax zu bringen, wogegen die Zeilengruppen, wenn sie nicht auf das Potential VGmax gebracht werden, auf das Potential VGmin derart gebracht werden, daß die Mikrospitzen (14) keine Elektronen emittieren,
- während der Auswahlzeit t für jede Zeile (16) der betrachteten Zone Zi nacheinander die Anoden A1,i, A2,i, A3,i auf Potentiale VA1max, VA2max bzw. VA3max zu bringen, die ausreichen, um die gegebenenfalls von den Mikrospitzen mit einer über der Schwellenenergie der Kathodenlumineszenz des jeweiligen lumineszierenden Materials (28, 29, 30) liegenden Energie emittierten Elektronen anzuziehen, während der jeweiligen Adressierungszeiten t1, t2, t3 derart, daß $t1 + t2 + t3 = t$, wogegen die Anoden A1,i, A2,i, A3,i, wenn sie nicht auf die Potentiale VA1max, VA2max bzw. VA3max gebracht werden, auf Potentiale VA1min, VA2min bzw. VA3min gebracht werden, Potentiale VA1min, VA2min bzw. VA3min derart, daß die von den Mikrospitzen emittierten Elektronen abgestoßen werden oder eine Energie kleiner als eine Schwellenenergie der Kathodenlumineszenz des entsprechenden lumineszierenden Stoffes haben,
- während der Zeit der Adressierung t1, t2, t3 jeder Anode A1,i, A2,i, A3,i die Kathodenleiter (12) zu adressieren, um die Rasterpunkte, die leuchten sollen, "anzuschalten".

6. Verfahren zur Adressierung eines Mikrospitzen-Fluoreszenzbildschirmes nach Anspruch 3, bei dem die Anzeige eines Einzelbildes von dem Bild während einer Einzelbildzeit T erfolgt, dadurch gekennzeichnet, daß es darin besteht, zur Anzeige eines Einzelbilds des Bildschirmes die folgenden Operationen durchzuführen:

- nacheinander jede der Anoden Ai, wobei i von 1 bis k geht, während einer Adressierungszeit tZ derart, daß $tZ = T/k$, auf ein Potential VAmax zu bringen, wogegen die Anoden Ai, wenn sie nicht auf ein Potential VAmax gebracht werden, das ausreicht, um die gegebenenfalls von den Mikrospitzen (14) emittierten Elektronen anzuziehen, auf ein Potential VAmin gebracht werden, so daß die von den Mikrospitzen (14) emittierten Elektronen abgestoßen werden oder eine Energie kleiner als eine Schwellenenergie der Kathodenlumineszenz des entsprechenden lumineszierenden Stoffes haben,

- während der Adressierungszeit tZ für jede Anode Ai nacheinander jede Zeilengruppe während einer Zeilenauswahlzeit t derart, daß t = T/N, auf ein Potential VGmax zu bringen, wogegen die Zeilengruppen, wenn sie nicht auf das Potential VGmax gebracht werden, auf ein Potential VGmin derart, daß die Mikrospitzen (14) keine Elektronen emittieren, gebracht werden,

- während der Zeilenauswahlzeit t für jede Zeilengruppe die Kathodenleiter (12) zu adressieren, um die Rasterpunkte, die leuchten sollen, "anzuschalten".

FIG. 1

FIG. 2

FIG. 3 B

FIG. 3 A

FIG. 4

FIG. 5

FIG. 6

FIG. 7

FIG. 8

FIG 9

FIG. 10